Europäisches Patentamt

(19) European Patent Office

Office européen des brevets

(11) Veröffentlichungsnummer: **0 098 926**
**B1**

(12) **EUROPÄISCHE PATENTSCHRIFT**

(45) Veröffentlichungstag der Patentschrift:
05.02.86

(21) Anmeldenummer: 83104029.0

(22) Anmeldetag: 25.04.83

(51) Int. Cl.⁴: **C 21 C 5/56, C 21 C 5/34**

(54) Verfahren zur Stahlherstellung aus festen, metallischen Eisenträgern.

(30) Priorität: 16.07.82 DE 3226590

(43) Veröffentlichungstag der Anmeldung:
25.01.84 Patentblatt 84/4

(45) Bekanntmachung des Hinweises auf die Patenterteilung:
05.02.86 Patentblatt 86/6

(84) Benannte Vertragsstaaten:
AT BE FR GB IT LU NL SE

(56) Entgegenhaltungen:
FR - A - 2 170 281
GB - A - 2 072 706
LU - A - 82 813
US - A - 3 772 000

(73) Patentinhaber: Klöckner CRA Technologie GmbH,
Klöcknerstrasse 29, D-4100 Duisburg 1 (DE)

(72) Erfinder: Chitil, Manfred, Dr.-Ing.,
Thorn-Prikker-Strasse 41, D-4150 Krefeld-Bockum (DE)

(74) Vertreter: König, Reimar, Dr.-Ing., Patentanwälte
Dr.-Ing. Reimar König Dipl.-Ing. Klaus Bergen
Wilhelm-Tell-Strasse 14 Postfach 260162,
D-4000 Düsseldorf 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen):

LIBER, STOCKHOLM 1986

## Beschreibung

Die Erfindung bezieht sich auf ein Verfahren zur Stahlher-stellung aus festen, metallischen Eisenträgern in einem Konverter, der über Unterbad-Einleitungsdüsen für einen kohlenstoffhaltigen Brennstoff und für Sauerstoff verfügt, bei dem bei jedem Konverterzyklus

- eine Menge von Eisenträgern in den Konverter eingeführt wird,
- diese mit einer aus einem vorangegangenen Konverterzyklus stammenden Menge an Flüssigeinsatz übergossen wird,
- die Gesamtcharge durch Einleiten von Brennstoff und Sauerstoff aufgeschmolzen wird, und
- ein Teil der gesamten Abstichmenge für den Flüssigein-satz bei einem nachfolgenden Konverterzyklus in ein Aufbewahrungsgefäß abgestochen wird.

Bei diesem aus der DE-OS 29 39 859 bekannten Verfahren zui Stahlherstellung aus festen, metallischen Eisenträ-gern wird bei jedem Konverterzyklus ein Teil und vorzugs-weise dei überwiegende Teil der Abstichmenge der weiteren Verarbeitung, beispielsweise einer Stranggußanlage, zuge-führt, während der Rest getrennt aufbewahrt und als flüs-sige Stahlnenge in einem nachfolgenden Konverterzyklus eingesctzt und dabei einer Charge von Eisenträgern zuge-geben wird. Bei diesem Stahlherstellungsverfahren arbeitet man somit quasi-kontinuierlich, es wird zu Beginn einer Reihe von Konverterzyklen einmal eine flüssige Roheisen-oder Rohstahlmenge benötigt, in den nachfolgenden Kon-verterzyklen stammt die flüssig eingesetzte Eisen- oder Stahlmenge jeweils aus dem vorangegangenen Konverterzyklus.

Bei diesem bekannten Stahlherstellungsverfahren kann so-mit Stahl aus festen Eisenträgern ohne Bedarf von flüs-sigem Roheisen und mit hoher Energieausnutzung in rela-tiv kurzer Chargenfolgezeit und somit in wirtschaftlicher Weise erzeugt werden. Das Verfahren ist nicht an eine Roheisen-Erzeugungsanlage gebunden und ermöglicht die Stahlherstellung ausschließlich aus festen Eisenträgern, insbesondere aus Schrott.

Bei der Anwendung dieses bekannten Verfahrens in vorhan-denen Konvertern und bei reinen Schrottchargen hat sich jedoch herausgestellt, daß das vollständige Chargengewicht des Konverters nicht immer erreicht wird, weil nicht die notwendige Menge an Schrott in den Konverter eingegeben werden kann. Der Schrott ist im allgemeinen so speirig, daß der Konverter beim Chargieren aufge-füllt ist, bevor die gewichtsmäßig gewünschte Schrott-menge eingefüllt wurde. Anders ausgedrückt wird das Chargieren des Schrotts durch das Konvertervolumen be-grenzt, das Chargengewicht wird somit nicht erreicht und nicht ausgenutzt.

Man könnte nun zunächst nur einen Teil der in einem Konverterzyklus aufzuschmelzenden Schrottmenge in den Konverter eingeben und den Rest später, z. B. in Form von Kühlschrott, nachchargieren. Beim Nachchargieren wird dei Produktionsablauf jedoch unterbrochen, da der Konverter in die Chargierstellung geschwenkt werden muß.

Man könnte nun Konverter mit größerem Innenvolumen ver-wenden, also Konverter mit einem größeren Konvertervolu-men einsetzen. Das Konvertervolumen ist allgemein durch das verfügbare Innenvolumen pro Tonne Stahl gegeben und liegt bei den meisten Konvertern unter 1, typischerweise bei 0,8. Es gibt jedoch auch Konverter mit noch kleine-rem Konvertervolumen. Geht man nun einmal davon aus, daß der eingesetzte Schrott aufgrund seiner Sperrigkeit, also des hohen Anteils von Luftzwischenräumen ein spezifisches Gewicht von etwa 1 hat, so erkennt man, daß man zumal bei den angestrebten und wirtschaftlicheren, kleineren Repetiermengen von z. B. 20 % des Gesamtchargengewichtes die zum Chargieren notwendige Menge an Schrott nicht in den Konverter einbringen kann. Dabei muß auch berücksich-tigt werden, daß der Konverter in der Schräglage gefüllt wird und daß dadurch nur 80 % des Innenvolumens des Kon-verters ausgenutzt werden können. Bei Konvertern mit größerem Konvertervolumen, z. B. oberhalb 1, tritt die-ser Nachteil zwar nicht auf, ein derartiger Konverter ist jedoch aufgrund seiner größeren Innenfläche, die höhere Kosten für das Feuerfestmaterial erforderlich macht, unwirtschaftlicher. Zudem ist die Vergrößerung des Konvertervolumens keine Lösung bei der Umstellung bereits vorhandener Konverter auf das bekannte Verfahren.

Ein weiterer Nachteil des bekannten Verfahrens liegt darin, daß bei jedem Konverterzyklus fertiggefrischt werden muß, weil stets ein Teil der Abstichmenge der weiteren Verarbeitung zugeleitet wird, also eine ge-wünschte Stahlqualität und somit insbesondere einen bestimmten Kohlenstoffgehalt aufweisen muß. Nach dem bekannten Verfahren wird die Flüssigkeit in ein Aufbewah-rungsgefäß, insbesondere eine Stahlpfanne, gegeben. Die für das Repetieren vorgesehene Stahlmenge wird aufgekohlt, was vorzugsweise im Aufbewahrungsgefäß durchgeführt werden kann. Das Aufkohlen kann jedoch auch im Konverter nach dem Abstechen der für die Weiterverarbeitung bestimmten Stahl-menge erfolgen, verlängert dann aber die Zykluszeit. Durch Aufkohlen wird in bekannter Weise der Liquiduspunkt er-niedrigt, es erübrigt sich eine Wärmezufuhr zum Aufbewah-rungsgefäß, falls die Zeitdauer bis zum nächsten Konverter-zyklus ausreichend gering ist.

Aufgabe der Erfindung ist es, die Nachteile des bekannten, mit Repetieren arbeitenden Stahlerzeugungsverfahrens zu vermeiden, jedoch dessen Vorteile, insbesondere eine Stahlherstellung praktisch ausschließlich aus Schrott, beizu-behalten und dieses Verfahren dahingehend zu verbessern, daß bei vorgegebenem, beschränkten Konvertervolumen des Konverteis das Chargengewicht, für das der Konverter aus-gelegt ist, gehalten werden kann.

Diese Aufgabe wird dadurch gelöst, daß der Konverter zu Beginn eines jeden Konverterzyklus mit einem Haufwerk an Schrott gefüllt wird, daß alternierend die Abstichmenge mindestens eines Konverterzyklus (Produktionszyklus) der Weiterverarbeitung, z. B. dem Gießbetrieb, und der über-wiegende Teil der Abstichmenge mindestens eines anschlies-senden Konverterzyklus (Repetierzyklus) in mindestens zwei, jeweils die Menge an Flüssigeinsatz für mindestens zwei nachfolgende Konverterzyklen aufnehmende Aufbewah-rungsgefäße gegeben wird.

Im Gegensatz zum bekannten Stahlherstellungsverfahren wer-den also alternierend Produktionszyklen und Repetierzyklen, beispielsweise abwechselnd ein Produktions- und ein Re-petierzyklus usw. durchgeführt. Bei den Produktionszyklen wird der Stahl fertig gefrischt, bei den Repetierzyklen ist die Einhaltung einer bestimmten Stahlqualität nicht erforderlich, insbesondere kann auf das Fertigfrischen verzichtet werden. Vorteilhaft ist, daß das Gesamtchargen-gewicht, für das der Konverter ausgelegt ist, bei jedem einzelnen Konverterzyklus erreicht werden kann.

Im Unterschied zu dem bekannten Verfahren wird erfindungs-gemäß weiterhin in mindestens zwei Aufbewahrungsgefäße abgestochen. Die Anzahl der Aufbewahrungsgefäße, in die abgestochen wird, ist dabei um 1 größer als die Anzahl der hintereinander folgenden Produktionszyklen, so daß stets eine Repetierstahlmenge für den anschließenden Re-petierzyklus vorhanden ist.

Die Arbeitsweise für das Stahlherstellungsverfahren nach der Erfindung verläuft ebenso periodisch wie bei dem bekannten Verfahren, jedoch besteht eine Periode nicht aus nur einem Konverterzyklus, sondern aus mindestens zwei Konverterzyklen, nämlich einem Repetierzyklus und einem Produktionszyklus. Eine Periode kann auch aus beispiels-weise zwei Repetierzyklen und einem Produktionszyklus oder einem Repetierzyklus und zwei Produktionszyklen usw. bestehen. Die Anzahl der Einzelzyklen richtet sich ins-besondere nach dem Konvertervolumen, der notwendigen Menge an Flüssigeinsatz bezogen auf die Gesamtcharge und in gewissem Maße auch nach dem spezifischen Gewicht, also der Sperrigkeit des eingesetzten Schrottes. Man wird bestrebt sein, den Anteil des Flüssigkeinsatzes bezogen auf die Gesamtchaige gering zu halten, weil dadurch die Nettostahlerzeugung größer wird.

Erfindungsgemäß wird das in den Konverter chargierte Hauf-werk an Schrott vor der Zugabe des Flüssigeinsatzes nicht oder zumindest nur teilweise mittels Brennstoff-Sauerstoff-Brennern vorgewärmt. Andererseits ist jedoch hierdurch eine Betriebsweise wie bei dem bekannten Stahlherstellungs-verfahren nach der DE-OS 29 39 859 nicht ausgeschlossen. Das Maß des Vorwärmens kann erfindungsgemäß so variiert werden, daß ein möglichst wirtschaftlicher Betrieb erreicht wird. Den entscheidenden Einfluß hierauf nehmen der Preis für den zum Vorwärmen verwendeten Brennstoff, beispiels-weise Erdgas oder Erdöl und der Preis für den kohlenstoff-haltigen, durch Unterbad-Einleitungsdüsen eingeblasenen Brennstoff. Da letzterer nur zu Kohlenmonoxid oxidiert wird und das aus dem Konverter abströmende Gas, Kohlegas genannt, einen guten Heizwert besitzt und weiterverkauft werden kann, ist durchaus ein Konverterbetrieb mit nur ge-ringem Vorheizen wirtschaftlich, falls der Erdöl- bzw. der Erdgaspreis hoch liegt, der Preis für den kohlenstoff-haltigen Brennstoff, also beispielsweise die Kohle,jedoch bezogen auf dieselbe Wärmemenge geringer liegt. Das erfindungsgemäße Verfahren ermöglicht eine Anpassung an die jeweiligen Energiepreise, weil ein geringeres Vorwärmen nicht nur durch eine höhere Zugabe von kohlenstoffhalti-gem Brennstoff in die Flüssigphase, sondern auch durch eine erhöhte Zugabe an Flüssigeinsatz ausgeglichen werden kann.

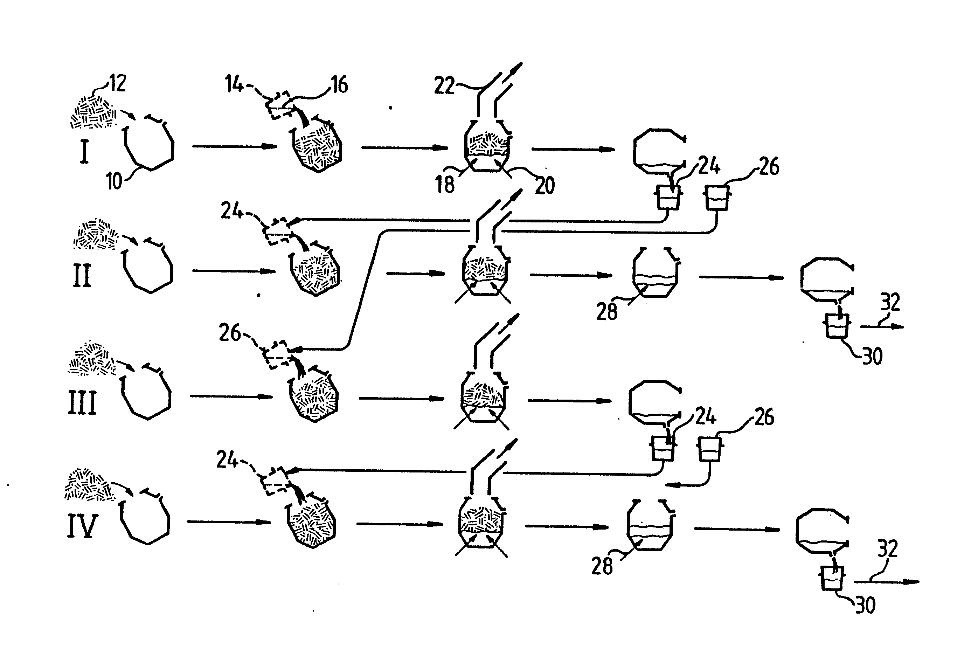

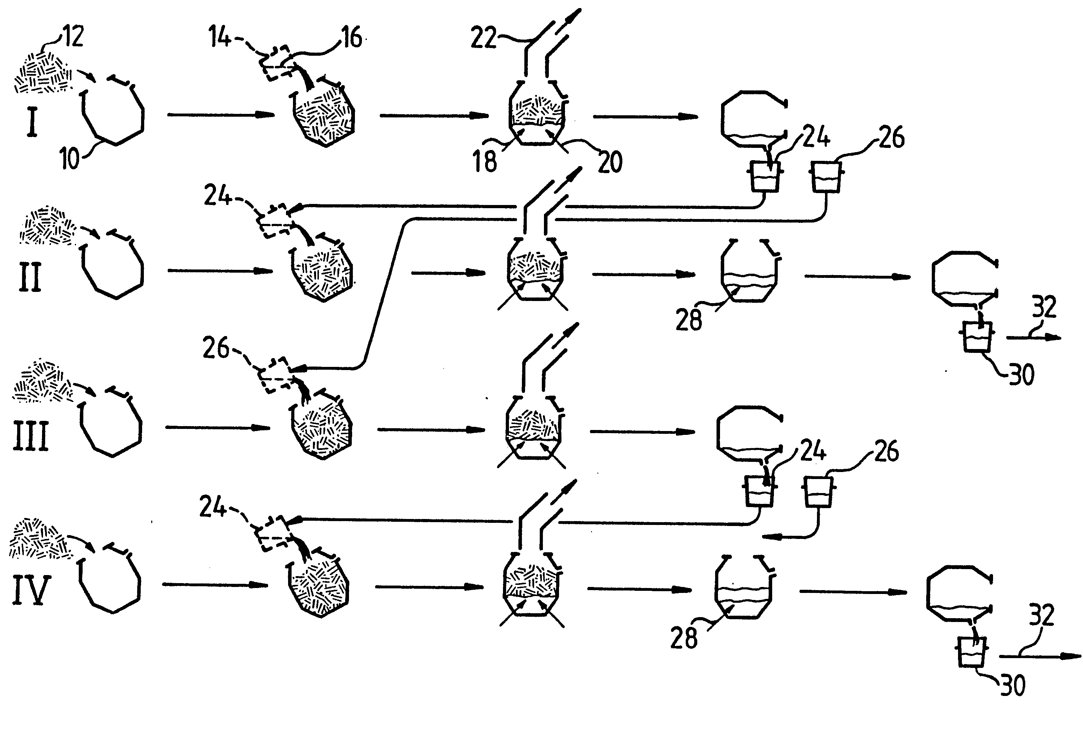

Das erfindungsgemäße Verfahren wird im folgenden beispiel-haft anhand der beiliegenden Zeichnung erläutert, die eine schcmatische Darstellung eines Verfahrensablaufes für vier Konverterzyklen zeigt.

In der Zeichnung sind die einzelnen Konverterzyklen mit römischen Ziffern bezeichnet. Bei dem ersten, anfängli-chen Konverterzyklus I wird in einen leeren Konverter 10 mit beispielsweise 200 t Chargengewicht eine Menge 12 von 100 t Schrott eingegeben. Anschließend wird, wie das zweite Teilbild für den Zyklus I zeigt, aus einer Hilfs-pfanne 14 eine flüssige Eisen- oder Stahlmenge als Flüssigeinsatz 16 auf die Schrottmenge 12 chargiert. Im drit-ten Teilbild dieses Konverterzyklus I wird nun in bekann-ter Weise über Unterbad-Einleitungsdüsen Kohle 18 und-Sauerstoff 20 getrennt voneinander in die Flüssigphase eingeleitet, wodurch die Schrottmenge 12 wie im dritten Teilbild gezeigt nach und nach aufschmilzt. Die eingebla-sene Kohle 18 wird zu Kohlenmonoxid vergast, das über einen Abzug 22 entnommen wird. Dort wird ebenfalls die fühlbaie Wärme des heißen Kohlegases größtenteils entnommen.

Im vierten Teilbild des Konverterzyklus I schließlich wird die aufgeschmolzene, jedoch nicht fertig gefrischte Roheisenmenge in zwei Hilfspfannen 24 und 26 abgestochen, jede Hilfspfanne nimmt somit 100 t Roheisen auf.

Beim nachfolgenden Konverterzyklus II wird wiederum eine Schrottmenge 12 von 100 t Gewicht in den entleerten Kon-verter 10 chargiert. Nun wird, wie das zweite Teilbild dieses Konverterzyklus II zeigt, das Roheisen aus der Hilfspfanne 24 in den Konverter 10 eingegeben. Es schließt sich im dritten Teilbild das Aufschmelzen mit Einblasen von Kohle 18 und Sauerstoff 20, wie oben für den Konver-terzyklus I beschrieben, an. In Abweichung von diesem ersten Konverterzyklus I wird jedoch anschließend, wie im vierten Teilbild des Konverterzyklus II gezeigt ist, fertig gefrischt. Hierzu wird in bekannter Weise Sauer-stoff 28 in den Konverter 10 eingeblasen. Weiterhin wer-den andere bekannte Schritte durchgeführt, um die für die gewünschte Weiterverarbeitung benötigte Stahlqualität einstellen zu können. Im fünften Teilbild des Konverter-zyklus II wird der erzeugte Stahl in eine Pfanne 30 ab-gestochen und, wie durch den Pfeil 32 angedeutet ist, dem Gießbetrieb zugeführt. Der Konverterzyklus II ist somit ein Produktionszyklus.

Der Inhalt der zweiten Hilfspfanne 26, die ebenfalls im ersten Konverterzyklus I gefüllt wurde, wird nun im nach-folgenden dritten Konverterzyklus III benutzt. Hierzu wiid wie bei den vorangegangenen Zyklen eine Schrottmenge 12 von 100 t Schrott in den Konverter 10 chargiert. An-schließend wird, wie das zweite Teilbild zeigt, der In-halt der zweiten Hilfspfanne 26 auf das Haufwerk des vorgewärmten oder nicht vorgewärmten Schrotts gegeben. Damit ist die gesamte, im ersten Konverterzyklus I her-gestellte Roheisenmenge im Stahlherstellungsverfahren selbst weiterbenutzt worden, der Konverterzyklus I ist somit, wie der zur Zeit beschriebene Konverterzyklus III ein 100 %-iger Repetierzyklus. Im dritten Teilbild des Konverterzyklus III wird wiederum über das Einblasen von Kohle 18 und Sauerstoff 20 der Schrott aufgeschmolzen und schließlich, wie im vierten Teilbild gezeigt ist, wird das flüssige Roheisen in die zwei Hilfspfannen 24 und 26 abgestochen.

Bei dem vierten Konverterzyklus IV handelt es sich wie-derum um einen Produktionszyklus, der vollständig dem oben beschriebenen Zyklus II gleicht.

Aus der Zeichnung läßt sich ersehen, daß zwei aufeinan-derfolgende Konverterzyklen, z. B. die Zyklen II und III eine Periode bilden, die sich im Laufe des weiteren Stahlherstellungsverfahrens immer wiederholt.

Zweckmäßigerweise werden die in den Aufbewahrungsgefäßen (Hilfspfannen) 24, 26 befindlichen Repetiermengen in diesen Gefäßen entschwefelt, bevor sie als Flüssigeinsatz in einem nachfolgenden Konverterzyklus einer Schrottmenge zugegeben werden. Die Entschwefelung erfolgt nach den bekannten Verfahren.

## Patentansprüche

1. Verfahren zur Stahlherstellung aus festen, metalli-schen Eisenträgern in einem Konverter, der über Unter-bad-Einleitungsdüsen für einen kohlenstoffhaltigen Brennstoff und für Sauerstoff verfügt, bei dem bei jedem Konverterzyklus
- eine Menge von Eisenträgern in den Konverter einge-füllt üvird,

diese mit einer aus einem vorangegenommen Konverter-terzyklus stammenden Menge an Flüssigeinsatz über-gossen wird,
- die Gesamtcharge durch Einleiten von Brennstoff und Sauerstoff aufgeschmolzen wird, und
- ein Teil der gesamten Abstichmenge für den Flüssig-einsatz bei einem nachfolgenden Konverterzyklus in ein Aufbewahrungsgefäß abgestochen wird, dadurch gekennzeichnet, daß der Konverter zu Beginn eines jeden Konverterzyklus mit einem Haufwerk an Schrott gefüllt wird, daß alteinierend die Abstichmenge mindestens eine; Kon-verterzyklus (Produktionszyklus) der Weiterverarbei-tung, z.B. dem Gießbetrieb, und der überwiegende Teil der Abstichmenge mindestens eines anschließenden Kon-verterzyklus (Repetierzyklus) in mindestens zwei, je-weils die Menge an Flüssigeinsatz für mindestens zwei nachfolgende Konverterzyklen aufnehmende Aufbewahrungs-gefäße gegeben wird.

2. Verfahren nach Anspruch 1, dadurch gekennzeichnet, daß das Haufwerk an Schrott nach dem Chargieren in den Konverter und vor der Zugabe des Flüssigeinsatzes nicht oder zumindest nur teilweise mittels Brennstoff-Sauerstoff-Brennern vorgewärmt wrird.

3. Verfahren nach Anspruch 1, dadurch gekennzeichnet, daß alternierend ein Produktionszyklus und ein Repe-tierzyklus durchgeführt werden.

4. Verfahren nach einem der Ansprüche 1 bis 3, dadurch gekennzeichnet, daß der Anteil des Flüssigeinsatzes an der Gesamtchar-ge 20 bis 50 % beträgt und daß der verbleibende Teil der Gesamtcharge soweit wie es das Fassungsvermögen des Konverters erlaubt durch Schrott gebildet wird.

5. Verfahren nach einem der Ansprüche 1 bis 4, dadurch gekennzeichnet, daß bei den Repetierzyklen ohne Fertigfrischen abge-stochen wird.

6. Verfahren nach einem der Ansprüche 1 bis 5, dadurch gekennzeichnet, daß die Repetiermengen insbesondere in den Aufbewahrungsgefäßen entschwefelt werden, bevor sie in einem nachfolgenden Konverterzyklus im Konverter dem Schrott zugegeben werden.

## Claims

1. A method of steel production from solid iron-containing material in a converter equipped with melt-submerged nozzles for the injection of a carbon-contain-ing fuel and of oxygen, in which, for each converter cycle
- a charge of said solid material is put into the converter,
- a liquid charge originating from a preceding converter cycle is poured over this charge,
- the total charge is melted down by an introduction of fuel and oxygen, and

- a portion of the total tapped-off melt is tapped off into a holding vessel for use as liquid charge in a subsequent converter cycle,

characterised in that the converter is filled with said solid material in the form of ferrous scrap at the start of each converter cycle, that alternately the tapped output of at least one converter cycle (production cycle) is taken away for further processing, e.g. in a foundry, and the predominant portion of the tapped out-put of at least one following converter cycle (repeat cycle) is tapped into at least two holding vessels respectively receiving a quantity corresponding to the liquid charge required for at least two later converter cycles.

2. A method according to Claim 1, characterised in that the heaped scrap is not, or is at least only partially, pre-heated by means of fuel-oxygen burners after being charged in the converter and prior to the addition of the liquid charge.

3. A method according to Claim 1 or Claim 2 characterised in that one production cycle and one repeat cycle are executed in alternating sequence.

4. A method according to any one of Claims 1 to 3, characterised in that the proportion of the liquid charge in the total charge is between 20% and 50% by weight and in that the remainder of the total charge consists of ferrous scrap.

5. A method according to any one of Claims 1 to 4, characterised in that for repeat cycles the converter is tapped without a final refining stage.

6. A method according to any one of Claims 1 to 5, characterised in that the repeat charges are desulphurized before they are added to the scrap charge in a following converter cycle.

**Revendications**

1. Procede d'elaboration d'acier, à partir de matières mé-talliques solides contenant du fer, dans un convertis-seur muni de buses d'injection montées au-dessous de la surface du bain pour l'introduction d'un combustible contentant du carbone et d'oxygène, dans lequel, à cha-que cycle du convertieseur, on charge dans le convertisseur une certaine quantité de matières coate contenant du fer sur laquelle on verée ensuite une certaine quantité du bain provenast d'un cycle de convertisaeur anterieur, la totalite ie la charge étant ensuite portée à fusion par introduction de combustible et d'oxygène et une par-tie de la quantite totale diaponible à la coulée etant versée dans un recipient où elle est conservée pour être reintroduite à l'etat liauide au cours d'un cycle de convertisseur ultérieur, caractérisé en ce qu'au début de chaque cycle le convertisseur est rempli par un amas de ferraille et, alternativement, que la quantité ob-tenue à la coulée dans au moins un cycle de convertis-seur (cycle de production) est dirigée vers un traite-ment ultérieur, par exemple envoyée en fonderie, et que la plus grande partie de la quantité obtenue à la coulée dans l'un au moins des cycles de convertisseur suivants (cycle de répétition) est versée dans au moins deux re-cipients où elle est conservée et qui contiennent chacun la quantité de bain nécessaire à au moins deux cycles de convertisseur ultérieurs.

2. Procédé selon la revendication 1, caractérisé en ce qu' après son chargment dans le convertisseur et avant l'in-troduction du bain, l'amas de ferraille n'est pas pré-chauffé ou n'est préchauffé que partiellement au moyen de brûleurs à combustible et à oxygène.

3. Procédé selon la revendication 1, caractérisé en ce qu'on exécute alternativement un cycle de production et un cycle de répétition.

4. Procédé selon l'une des revendications 1 à 3, caracteri-sé en ce que la proportion de bain liquide recyclé re-presente de 20 à 50 % de la charge totale et que le reste de la charge totale est constitué, par autant de ferrailles que le convertisseur peut en contenir.

5. Procédé selon l'une des revendications 1 à 4, caractéri-sé en ce que lors des cycles de répétition la coulée est effectuée sans qu'il soit procédé à un affinage définitif.

6. Procédé selon l'une des revendications 1 à 5, caractéri-sé en ce que les parties de bain utilisées dans le cycle de répétition sont désulfurées dans les récipients où elles sont conservées avant d'être ajoutées à la ferrail-le dans le convertisseur pour un cycle de convertisseur ultérieur.

0 098 926

I

12
10
14 16
22
18 20
24 26

II

24
28
32
1/1
30
26

III

26
24 26

IV

24
28
32
30

0098926